**Europäisches Patentamt**

**European Patent Office**

**Office européen des brevets**

(19)

(11) Veröffentlichungsnummer: **0 043 580**
**B1**

(12) # EUROPÄISCHE PATENTSCHRIFT

(45) Veröffentlichungstag der Patentschrift:
**06.04.83**

(21) Anmeldenummer: **81105250.5**

(22) Anmeldetag: **07.07.81**

(51) Int. Cl.³: **B 32 B 5/28, E 06 B 9/10,
D 06 N 7/00**

(54) **Kunststoffbeschichtete Textilbahn.**

(30) Priorität: **08.07.80 DE 3025736**

(43) Veröffentlichungstag der Anmeldung:
**13.01.82 Patentblatt 82/2**

(45) Bekanntmachung des Hinweises auf die Patenterteilung:
**06.04.83 Patentblatt 83/14**

(84) Benannte Vertragsstaaten:
**AT BE FR GB IT NL SE**

(56) Entgegenhaltungen:
**DE-A-1 921 008
FR-A-2 367 608
US-A-3 736 220**

**AMERICAN DYESTUFF REPORTER, 25. Dezember
1961, Seiten 13 (1007)–21(1015). A.C. NUESSLE et al.:
"Reactive acrylics – A New type of textile Finishing material"**

(73) Patentinhaber: **Konrad Hornschuch Aktiengesellschaft,
D-7119 Weissbach (DE)**

(72) Erfinder: **Hellwig, Manfred, Alemannenstrasse 29,
D-7110 Öhringen (DE)**
Erfinder: **Scholz, Hans-Günter, Dr. Dipl.-Chem.,
Weinbergstrasse 18, D-7119 Weissbach (DE)**

(74) Vertreter: **Bunke, Max, Dipl.-Ing. et al, Patentanwälte
Prinz, Bunke & Partner Lessingstrasse 9,
D-7000 Stuttgart 1 (DE)**

Kunststoffbeschichtete Textilbahn

Die Erfindung betrifft eine kunststoffbeschichtete Textilbahn, insbesondere zur Verkleidung von Oberflächen aus Holz, Metall, Kunststoff und Gipskarton.

Es ist bekannt, zur Verkleidung von solchen Oberflächen gewöhnliche Kunststoffolien zu verwenden, die entweder selbstklebend ausgerüstet sind oder aber unmittelbar auf das mit Kleber beschichtete Substrat aufgewalzt und somit dauerhaft verklebt werden können. Bei Pressspanplatten werden hierfür kalt klebende Dispersionsklebstoffe verwendet, bei Blechen werden dagegen hitzeaktivierbare Kleber, die bei Temperaturen von etwa 200°C aktivierbar sind, verwendet.

Es ist weiterhin bekannt, PVC-Folien ein- oder mehrfach zu bedrucken und nach Art einer Holzoberfläche oder einer Gewebestruktur zu prägen. Während man Holzoberflächen auf diese Weise täuschend ähnlich imitieren kann, sind die bisher üblichen Gewebestruktur-Prägungen noch unvollkommen und sehr schnell als Imitationen zu erkennen.

Es ist weiterhin bekannt, textile Stoffe, insbesondere Gewebe, direkt, jedoch diskontinuierlich, auf Oberflächen aller Art zu kleben oder mechanisch, z.B. durch Heftklammern, Rahmen und dergleichen, zu befestigen. Dieses in aller Regel manuell durchgeführte Beziehen mit Textilien ist ausserordentlich aufwendig und deshalb teuer. Ausserdem sind solche Textilbespannungen nicht vor Verschmutzung, Feuchtigkeit und mechanischen Beanspruchungen (Abrieb) geschützt. Alle diese Nachteile gelten auch für Textiltapeten, bei denen die Textilien mit Papierbahnen verklebt sind.

Schliesslich sind steife Platten für Dekorationszwecke bekannt, bei denen Textilien in Melaminharz-Laminate eingebettet sind. Auch diese Platten lassen sich nicht kontinuierlich mit Oberflächen aus Holz oder Metall verkleben. Vor allem aber ist es nicht möglich, solche Platten abzukanten, also um die Kanten von beispielsweise zu verkleidenden Blechen herumzubiegen, weil dabei sofort Weissbruch auftreten oder das Laminat brechen würde.

Der Erfindung liegt die Aufgabe zugrunde, eine kunststoffbeschichtete Textilbahn zu schaffen, deren Oberfläche sowohl im Griff als auch im Aussehen der Oberfläche von Textilien weitestgehend entspricht, bei der das textile Material gegen Verschmutzung, Feuchtigkeit und mechanische Beanspruchungen (Abrieb) geschützt ist und die mit Hilfe eines kontinuierlichen Beschichtungsverfahrens mit Oberflächen aus Holz, Metall, Kunststoff und Gipskarton dauerhaft verklebt werden kann, dabei ohne Weissbruch abgekantet werden kann und dabei so flexibel ist, dass auch scharfe und spitzwinklige Kanten verklebt werden können, ohne dass sich im Bereich des Falzes Ablösungen, Luftblasen, Wülste und dergleichen bilden.

Diese Aufgabe wird gemäss der Erfindung durch eine kunststoffbeschichtete Textilbahn gelöst, die gekennzeichnet ist durch

(a) eine dekorative Oberschicht mit im wesentlichen textilem Griff und textilem Aussehen, die aus einem Textilstoff besteht, dessen Fäden bzw. Fasern mit zwei verschiedenen Schichten von transparentem flexiblem Kunststoff imprägniert sind, nämlich mit einer ersten Schicht aus duroplastischem Kunststoff und mit einer zweiten, die erste Schicht und damit auch die Fäden bzw. Fasern vollständig ummantelnden Schicht aus einem Gemisch aus duroplastischem und thermoplastischem Kunststoff, und

(b) durch eine mit der Oberschicht fest verbundene Unterschicht aus flexiblem, thermoplastischem oder duroplastischem, gegebenenfalls geschäumtem Kunststoff, welche im Gegensatz zur Oberschicht eine geschlossene, glatte Oberfläche aufweist.

Unter «Textilstoff» werden hierbei Gewebe, Gewirke, Gestricke, Vliese und Fadenlagen-Nähgewirke aus natürlichen oder synthetischen organischen oder anorganischen Fasern oder Fasergemischen verstanden. Die hierbei verwendeten Garne bzw. Fasern können in an sich bekannter Weise flammfest ausgerüstet sein. Soweit es sich um Gewebe handelt, bestehen diese vorzugsweise aus Baumwolle, Polyester- oder Polyacrylfasern und/oder Gemischen dieser Fasern.

Unter «Kunststoff» werden alle Polymere, Copolymere, Mischpolymerisate und deren Gemische verstanden, die die jeweils geforderten Eigenschaften aufweisen, also transparent, flexibel und duroplastisch bzw. thermoplastisch sind. Als für die erfindungsgemässen Zwecke besonders geeignet erwiesen haben sich Polyvinylchlorid (PVC), Polyvinylacetat (PVAC), Polyurethan (PUR), vernetzbare und thermoplastische Polyacrylate, Acrylnitril-Butadien-Styrol-Copolymere (ABS) sowie deren Mischpolymerisate und Gemische.

Die erfindungsgemässe kunststoffbeschichtete Textilbahn vereinigt in sich die Vorzüge unbeschichteter Textilien einerseits und in Kunstharzplatten eingebetteter Textilien andererseits, ohne jedoch deren Nachteile zu besitzen: Der Griff und das Aussehen der erfindungsgemässen Textilbahn ist kaum vom optischen und sensorischen Eindruck unbehandelter textiler Wandbespannungen oder Textiltapeten zu unterscheiden, während darüberhinaus der Textilstoff gleichzeitig vor Verschmutzung, Feuchtigkeit und mechanischer Beanspruchung wirksam geschützt ist und dennoch die Textilbahn mit Hilfe kontinuierlicher Beschichtungsverfahren in Form eines endlosen Bandes auf Metall- und Kunststoffbänder, Holz- und Gipskartonplatten geklebt oder kaschiert werden kann. Die erfindungsgemässe Textilbahn kann insbesondere ohne Weissbruch geknickt und abgekantet werden und ist deshalb hervorragend für die Verkleidung dünner, scharfkantiger Bleche geeignet. Da die Fäden bzw. Fasern des Textilstoffes durch die zweischichtige Kunststoffimprägnierung vollständig ummantelt sind, ist die erfindungsgemässe Textilbahn hervorragend für die kontinuierliche Beschichtung von Oberflächen von Innenausstattungselementen geeignet, die erhöhter Beanspruchung ausgesetzt sind, beispielsweise in Kabinen von Hochseeschiffen, Eisenbahnwaggons, Kraftfahrzeugen, Flugzeugen, Restaurants, Hotels und dergleichen. Die Textilbahn kann aber auch vorteilhaft in Badezimmern, Duschen, Hallenbädern und dergleichen eingesetzt werden, wenn der Textilstoff zu 100% aus Synthesefasern besteht.

Durch die Wahl transparenter Kunststoffe für die Imprägnierung des Textilstoffes bleibt der optische Eindruck der textilen Oberfläche fast unverändert erhalten. Die Flexibilität des für die zweifache Imprägnierung des Textilstoffes verwendeten Kunststoffes und des für die Unterschicht verwendeten Kunststoffes ermöglicht es, die erfindungsgemässe Textilbahn zu Rollen aufzuwickeln, und verhindert ausserdem den beim Abkanten der bisher bekannten Laminate gefürchteten Weissbruch.

Es hat sich überraschenderweise gezeigt, dass nur mittels der zweifachen Beschichtung der Fäden bzw. Fasern des Textilstoffes die der Erfindung zugrundeliegende Aufgabe vorteilhaft gelöst werden kann. Die erste, ausschliesslich aus duroplastischem Kunststoff bestehende Schicht sorgt für Schiebefestigkeit und Stabilität des gleichzeitig als Träger verwendeten Textilstoffes und trägt ausserdem wesentlich zur Flammfestigkeit der Textilbahn bei. Die zweite, aus einem Gemisch aus duroplastischem und thermoplastischem Kunststoff bestehende Schicht macht die Textilbahn schmutzabweisend und abriebfest und bewirkt gleichzeitig, dass sich die thermoplastische, gegebenenfalls geschäumte Kunststoff-Unterschicht mit geschlossener, glatter Oberfläche so dauerhaft und fest, aber gleichzeitig elastisch mit der Oberschicht verbindet, dass der Verbund auch bei kontinuierlicher Beschichtung dünner, scharfkantiger Bleche die beim Beschichten auftretenden mechanischen und thermischen Beanspruchungen übersteht, ohne dass der optische Eindruck beeinträchtigt wird. Überraschenderweise ist die Verwendung eines Gemisches aus duroplastischem und thermoplastischem Kunststoff als zweite Schicht in der Oberschicht auch entscheidend dafür, dass die Unterschicht aus thermoplastischem, gegebenenfalls geschäumtem Kunststoff mit Hilfe eines Schmelzwalzenkalanders kontinuierlich aufgetragen werden kann, ohne dass die auf Schmelztemperatur des thermoplastischen Kunststoffes erhitzten Kalanderwalzen dabei verkleben.

Ein weiterer Vorteil der erfindungsgemässen Textilbahn besteht darin, dass der elastische Verbund Wärmeausdehnungen von mit der Textilbahn verkleideten Fertigbauteilen, insbesondere von Rigipsplatten, im Gegensatz zu Textiltapeten ohne Risse, und ohne die Eigenelastizität einzubüssen, übersteht.

Gemäss einer bevorzugten Ausführungsform der Erfindung besteht sowohl der duroplastische als auch der thermoplastische Kunststoff, mit denen der Textilstoff imprägniert ist, aus selbstvernetzenden, gegebenenfalls Acrylsäure und/oder Methacrylsäure enthaltenden Copolymeren von Niedrigalkylestern der Acrylsäure und Methacrylsäure, wobei die Alkylgruppen der Ester geradkettig oder verzweigt sind und 1 bis 5 C-Atome aufweisen. Dabei besteht der duroplastische Anteil der Kunststoffschichten vorzugsweise aus gegebenenfalls Acrylsäure und/oder Methacrylsäure enthaltenden Äthylacrylat-Methylmethacrylat-Copolymeren und der thermoplastische Anteil der zweiten Imprägnierungsschicht des Textilstoffes aus Methacrylat und Butylacrylat enthaltenden Copolymeren, die gegebenenfalls zusätzlich Acrylsäure und/oder Methacrylsäure enthalten. Der thermoplastische Anteil besteht vorteilhaft auch aus Polyvinylchlorid oder Polyvinylacetat.

Gemäss einer weiteren, vorteilhaften Ausführungsform der Erfindung enthalten sowohl die erste und zweite Kunststoffschicht, mit denen der Textilstoff imprägniert ist, als auch die Unterschicht ein Flammschutzmittel und/oder ein Biozid. Als Flammschutzmittel können Antimontrioxid, Chlorparaffin, aber auch mit den verwendeten Kunststoffen copolymerisierbare Halogen- oder Phosphorverbindungen verwendet werden. Da die bekannten Halogenverbindungen bei grosser Hitze, beim Verschwelen oder Schmelzen das jeweilige Halogen oder aber Halogenwasserstoff gasförmig freisetzen und diese Gase hochgiftig sind, werden erfindungsgemäss als Flammschutzmittel Metaphosphonsäuren oder Ammoniumsalze von Metaphosphonsäuren bevorzugt.

Da die zur Imprägnierung des Textilstoffes verwendeten Kunststoffe meist in Form von Dispersionen in geeigneten Dispersionsmitteln eingesetzt werden und zur Stabilisierung dieser Dispersionen Emulgatoren verwendet werden, kann häufig auf den besonderen Zusatz eines Biozids verzichtet werden, weil die verwendeten Emulgatoren selbst bereits biozide Eigenschaften aufweisen. Sofern die erfindungsgemässen Textilbahnen jedoch für die Innenausstattung von Nassräumen oder Hochseeschiffen verwendet werden sollen, wird vorzugsweise ein Biozid gesondert zugesetzt, beispielsweise ein Fungizid wie Pentachlorphenol oder dessen Natriumsalz.

Weitere vorteilhafte Ausführungsformen der Erfindung bestehen darin, dass in der ersten, rein duroplastischen Schicht das Gewichtsverhältnis von duroplastischem Kunststoff und Flammschutzmittel 1:1 bis 1,5:1 und das Gewichtsverhältnis von Kunststoff-Gemisch und Flammschutzmittel in der zweiten Schicht – jeweils in der Trockenmasse – 4:1 bis 5:1 beträgt.

Es hat sich gezeigt, dass bei einem Gewichtsverhältnis von duroplastischem und thermoplastischen Kunststoff in der Oberschicht von 5:1 bis 8:1 die Haftung der Unterschicht auf der Oberschicht optimal ist, dass die Unterschicht mit Hilfe eines Schmelzwalzenkalanders aufgetragen werden kann, ohne dass die Walzen verkleben, und dass die erfindungsgemässe Textilbahn den Anforderungen der DIN-Norm 4102 für «schwerentflammbare Baustoffe» entspricht und darüberhinaus ohne Freisetzung von Chlorwasserstoff abschmilzt.

Die Unterschicht der erfindungsgemässen Textilbahn besteht vorzugsweise aus Weich-PVC mit einem Weichmacheranteil von bis zu 50 Gewichtsteilen je 100 Gewichtsteile PVC. Als Weichmacher kann ein Monomerweichmacher wie Dioctylphthalat (DOP) eingesetzt werden. Das Weich-PVC kann weitere, an sich bekannte Füll- und Zusatzstoffe enthalten, beispielsweise Antimontrioxid als Flammschutzmittel, ein Biozid oder Pigmente.

Anstelle von Weich-PVC können auch andere thermoplastische Kunststoffe für die Unterschicht verwendet werden, beispielsweise auch ein flammfest ausgerüsteter Acrylatstrich, vorzugsweise ein vernetzender, direkt einstreichbarer Acrylat-Schlagschaum.

Falls in besonderen Ausnahmefällen, etwa wegen besonderer Füll- oder Zusatzstoffe, das Aufbringen der Unterschicht mit Hilfe eines Schmelzwalzenkalanders nicht zur erforderlichen Haftung zwischen Unter- und Oberschicht führt, können die beiden Schichten mit einem geeigneten Kleber verklebt und kaschiert oder heissverpresst werden.

Die oben genannte Aufgabe wird schliesslich durch ein Verfahren zur Herstellung der erfindungsgemässen Textilbahn gelöst, bei dem

(a) der Textilstoff in einer ersten Stufe stabilisiert und schiebefest gemacht wird und zu diesem Zwecke durch ein erstes Tauchbad geführt wird, das eine Dispersion aus duroplastischem Kunststoff in einem geeigneten Dispersionsmittel, bei Acrylsäure-Acrylat-Copolymeren beispielsweise Wasser, sowie Emulgatoren und gegebenenfalls Flammschutzmittel und/oder Biozide enthält,

(b) bei dem die so imprägnierte Textilbahn durch ein zweites Tauchbad, das eine Dispersion aus einem Gemisch aus duroplastischem und thermoplastischem Kunststoff in einem geeigneten Dispersionsmittel, Emulgatoren sowie gegebenenfalls Flammschutzmittel und/oder Biozide enthält, geführt und mit einer zweiten Schicht beschichtet wird,

(c) wonach überschüssiges Beschichtungsmaterial abgerakelt wird und die Textilbahn durch einen Trockenkanal geführt wird, wobei gleichzeitig die Vernetzung und/oder Kondensation der duroplastischen und thermoplastischen Kunststoffe eintritt,

(d) und bei dem schliesslich auf einem Schmelzwalzenkalander, dessen Walzen auf 150 bis 190°C erhitzt sind, die Unterschicht aus thermoplastischem Kunststoff auf die zweifach imprägnierte Textilbahn aufkalandriert wird.

Vorzugsweise wird der Textilstoff im ersten Tauchbad mit 20 bis 80 g/m², im zweiten Tauchbad mit 100 bis 130 g/m² beschichtet und die Unterschicht in einer Menge von 150 bis 170 g/m² aufkalandriert.

Je nach Art und Auflagemenge der verwendeten Kunststoffe für die Imprägnierung des Textilstoffes kann die Härte und die Abriebfestigkeit der Oberfläche des Verbundmaterials beeinflusst werden.

Die mit der erfindungsgemässen kunststoffbeschichteten Textilbahn bezogenen band- oder plattenförmigen Substrate können mit den für diese Substrate üblichen Methoden, z.B. durch Schneiden, Sägen, Abkanten bearbeitet werden, ohne dass sich die Textilbahn von der beschichteten Oberfläche ablöst. Da die dekorative Oberschicht eine versiegelte Oberfläche besitzt, kann das mit der Textilbahn beschichtete Innenausstattungselement ohne weiteres mit üblichen Feinwaschmitteln abgewaschen werden, eine Methode, die bei herkömmlichen Textiltapeten zur Ablösung und Zerstörung führen würde. Da die Oberschicht der erfindungsgemässen Textilbahn transparent ist, die Unterschicht aber deckend pigmentiert werden kann, kann das äussere Erscheinungsbild der Textilbahn ästhetisch reizvoll gestaltet werden.

Die erfindungsgemässe Textilbahn kann grundsätzlich auf alle glatten Oberflächen aufgeklebt, aufgeschweisst oder auf andere Weise befestigt werden, eignet sich aber aufgrund ihrer Eigenschaften besonders für den Schiffsinnenausbau, den Automobilbau, die Ausstattung von Bussen und Eisenbahnwaggons, für Wandverkleidungen, Mineralplattenbeschichtungen, für die Möbeiindustrie, für Wanddekorationen in hochfrequentierten und strapazierten Räumen von öffentlichen Gebäuden, Restaurants, Hotels, Schwimmbädern und dergleichen.

**Patentansprüche**

1. Kunststoffbeschichtete Textilbahn, gekennzeichnet durch

(a) eine dekorative Oberschicht mit im wesentlichen textilem Griff und textilem Aussehen, die aus einem Textilstoff besteht, dessen Fäden bzw. Fasern mit zwei verschiedenen Schichten von transparentem flexiblem Kunststoff imprägniert sind, nämlich mit einer ersten Schicht aus duroplastischem Kunststoff und mit einer zweiten, die erste Schicht und damit auch die Fäden bzw. Fasern vollständig ummantelnden Schicht aus einem Gemisch aus duroplastischem und thermoplastischem Kunststoff, und

(b) durch eine mit der Oberschicht fest verbundene Unterschicht aus flexiblem, thermoplastischem oder duroplastischem, gegebenenfalls geschäumtem Kunststoff, welche im Gegensatz zur Oberschicht eine geschlossene, glatte Oberfläche aufweist.

2. Textilbahn nach Anspruch 1, dadurch gekennzeichnet, dass sowohl der duroplastische als auch der thermoplastische Kunststoff, mit denen der Textilstoff imprägniert ist, aus selbstvernetzenden, gegebenenfalls Acrylsäure und/oder Methacrylsäure enthaltenden Copolymeren von Niedrigalkylestern der Acrylsäure und Methacrylsäure besteht, wobei die Alkylgruppen der Ester geradkettig oder verzweigt sind und 1 bis 5 C-Atome aufweisen.

3. Textilbahn nach Anspruch 2, dadurch gekennzeichnet, dass der duroplastische Anteil der Kunststoffschichten aus gegebenenfalls Acrylsäure und/oder Methacrylsäure enthaltenden Äthylacrylat-Methylmethacrylat-Copolymeren besteht und der thermoplastische Anteil der zweiten Schicht aus Methylmethacrylat und Butylacrylat enthaltenden Copolymeren, die gegebenenfalls zusätzlich Acrylsäure und/oder Methacrylsäure enthalten, oder aus PVC oder Polyvinylacetat besteht.

4. Textilbahn nach einem der Ansprüche 1 bis 3, dadurch gekennzeichnet, dass die erste und zweite Kunststoffschicht, mit denen der Textilstoff imprägniert ist, sowie gegebenenfalls die Unterschicht ein Flammschutzmittel und/oder ein Biozid enthalten.

5. Textilbahn nach Anspruch 4, dadurch gekennzeichnet, dass das Flammschutzmittel eine Metaphosphonsäure oder deren Ammoniumsalz ist.

6. Textilbahn nach Anspruch 4 oder 5, dadurch gekennzeichnet, dass in der ersten, rein duroplastischen Schicht das Gewichtsverhältnis von duroplastischem Kunststoff und Flammschutzmittel 1:1 bis 1,5:1 und das Gewichtsverhältnis von Kunststoff-Gemisch und Flammschutzmittel in der zweiten Schicht – jeweils in der Trockenmasse – 4:1 bis 5:1 beträgt.

7. Textilbahn nach einem der Ansprüche 1 bis 6, dadurch gekennzeichnet, dass das Gewichtsverhältnis zwischen duroplastischem und thermoplastischem Kunststoff in der dekorativen Oberschicht 5:1 bis 8:1 beträgt.

8. Textilbahn nach einem der Ansprüche 1 bis 7, dadurch gekennzeichnet, dass die mit der dekorativen Oberschicht fest verbundene Unterschicht aus Weich-PVC mit einem Weichmacheranteil von bis zu 50 Gewichtsteilen je 100 Gewichtsteile PVC besteht, das gegebenenfalls übliche Füll- und Zusatzstoffe enthält.

9. Textilbahn nach einem der Ansprüche 1 bis 7, dadurch gekennzeichnet, dass die Unterschicht aus einem vernetzten Acrylat-Schlagschaum besteht.

10. Textilbahn nach einem der Ansprüche 1 bis 9, dadurch gekennzeichnet, dass Ober- und Unterschicht mit einem geeigneten Kleber verklebt und kaschiert oder heissverpresst sind.

11. Verfahren zur Herstellung der Textilbahn gemäss einem der Ansprüche 1 bis 10, dadurch gekennzeichnet, dass

(a) der Textilstoff in einer ersten Stufe stabilisiert und schiebefest gemacht wird und hierzu durch ein erstes Tauchbad, das eine Dispersion aus duroplastischem Kunststoff in einem geeigneten Dispersionsmittel, Emulgatoren sowie gegebenenfalls Flammschutzmittel und/oder Biozide enthält, geführt und imprägniert wird,

(b) die so vorbehandelte Textilbahn durch ein zweites Tauchbad, das eine Dispersion aus einem Gemisch aus duroplastischem und thermoplastischem Kunststoff in einem geeigneten Dispersionsmittel, Emulgatoren sowie gegebenenfalls Flammschutzmittel und/oder Biozide enthält, geführt und mit einer zweiten Schicht imprägniert wird,

(c) wonach überschüssiges Beschichtungsmaterial abgerakelt wird und die Textilbahn durch einen Trockenkanal geführt wird, wobei gleichzeitig die Vernetzung und/oder Kondensation der duroplastischen und thermoplastischen Kunststoffe eintritt,

(d) und schliesslich auf einem Schmelzwalzenkalander, dessen Walzen auf 150 bis 190°C erhitzt sind, die Unterschicht aus thermoplastischem Kunststoff auf die zweifach imprägnierte Textilbahn aufkalandriert wird.

12. Verfahren nach Anspruch 11, dadurch gekennzeichnet, dass der Textilstoff im ersten Tauchbad mit 20 bis 80 g/m², im zweiten Tauchbad mit 100 bis 130 g/m² beschichtet wird und die Unterschicht in einer Menge von 150 bis 170 g/m² aufkalandriert wird.

13. Verwendung der Textilbahn gemäss einem der Ansprüche 1 bis 10 für die kontinuierliche Beschichtung von grossflächigen Wand- und Deckenverkleidungselementen in Form von Blechen, Metallbändern, Holz-, Kunststoff- und Gipskartonplatten für die Innenausstattung von Hoch- und Tiefbauten, Schiffskabinen, Eisenbahnwaggons, Kraftfahrzeugen und Flugzeugen.

**Claims**

1. Synthetic resin-coated textile strip, characterised by

a) a decorative upper layer with an essentially textile feel and textile appearance which consists of a textile, the threads or fibers of which are impregnated with two different layers of transparent flexible synthetic resin, namely, with a first layer of thermosetting synthetic resin and with a second layer, enveloping the first layer and thus also the threads or fibers, of a mixture of thermosetting and thermoplastic synthetic resin, and

b) by a lower layer, firmly connected with the upper layer, of flexible, thermoplastic or thermosetting optionally foamed synthetic resin which, in contradistinction to the upper layer, has an unbroken, smooth surface.

2. Textile strip according to claim 1, characterised in that not only the thermosetting but also the thermoplastic synthetic resin, with which the textile material is impregnated, consists of self-crosslinking co-polymers of lower alkyl esters of acrylic acid and methacrylic acid optionally containing acrylic acid and/or methacrylic acid, the alkyl groups of the esters being straight-chained or branched and having 1 to 5 C-atoms.

3. Textile strip according to claim 2, characterised in that the thermosetting part of the synthetic resin layers consists of ethyl acrylate-methyl methacrylate co-polymers optionally containing acrylic acid and/or methacrylic acid and the thermoplastic part of the second layer consists of co-polymers containing methyl methacrylate and butyl acrylate which optionally additionally contain acrylic acid and/or methacrylic acid, or of PVC or polyvinyl acetate.

4. Textile strip according to one of claims 1 to 3, characterised in that the first and second synthetic resin layers, with which the textile material is impregnated, as well as optionally the lower layer, contain a flame-protection agent and/or a biocide.

5. Textile strip according to claim 4, characterised in that the flame-protection agent is a metaphosphonic acid or its ammonium salt.

6. Textile strip according to claim 4 or 5, characterised in that in the first, purely thermosetting layer, the weight ratio of thermosetting synthetic resin and flame-protection agent amounts to 1:1 to 1.5:1 and the weight ratio of synthetic resin mixture and flame-protection agent in the second layer – in each case in the dry mass – amounts to 4:1 to 5:1.

7. Textile strip according to one of claims 1 to 6, characterised in that the weight ratio between thermosetting and thermoplastic synthetic resin in the decorative upper layer amounts to 5:1 to 8:1.

8. Textile strip according to one of claims 1 to 7, characterised in that the lower layer firmly connected with the decorative upper layer consists of soft PVC with a proportion of plasticiser of up to 50 parts by weight per 100 parts by weight of PVC, which optionally contains conventional filler and additive materials.

9. Textile strip according to one of claims 1 to 7, characterised in that the lower layer consists of a cross-linked acrylate beaten foam.

10. Textile strip according to one of claims 1 to 10, characterised in that the upper and lower layers are glued and laminated with a suitable adhesive or are hot-pressed.

11. Process for the production of the textile strip according to one of claims 1 to 10, characterised in that

(a) the textile material is stabilised and made nonslipping in a first step and thereafter passed through and impregnated in a first immersion bath, which contains a dispersion of thermosetting synthetic resin in a suitable dispersion agent, emulsifiers, as well as optionally flame-protection agents and/or biocides,

(b) the so pre-treated textile strip is passed through a second immersion bath, which contains a dispersion of a mixture of thermosetting and thermoplastic synthetic resin in a suitable dispersion agent, emulsifiers, as well as possibly flame-protection agents and/or biocides, and impregnated with a second layer,

(c) whereafter excess coating material is raked off and the textile strip is passed through a drying tunnel, the cross-linking and/or condensation of the thermosetting and thermoplastic synthetic resins thereby occurring simultaneously,

(d) and finally, on a melt-rolling calender, the rollers of which are heated to 150 to 190°C, the lower layer of thermoplastic synthetic resin is calendered on to the doubly impregnated textile strip.

12. Process according to claim 11, characterised in that the textile material is coated in the first immersion bath with 20 to 80 g/m², in the second immersion bath with 100 to 130 g/m² and the lower layer is calendered on in an amount of 150 to 170 g/m².

13. Use of the textile strip according to one of claims 1 to 10 for the continuous coating of large-surface wall and ceiling covering elements in the form of metal sheets, metal bands, wood, synthetic resin or gypsum-cardboard plates for the internal cladding of structures above and below ground level, ships' cabins, railway carriages, motor vehicles and aircraft.

**Revendications**

1. Bande textile revêtue de matière synthétique, caractérisée par

(a) une couche supérieure a effet décoratif dont la sensation au toucher et l'aspect correspondent à ceux d'une matière textile qui consiste en un tissu textile dont les fils ou les fibres sont imprégnées de deux couches différentes d'une matière synthétique flexible et transparente, à savoir d'une première couche en une matière synthétique thermodurcissable et d'une deuxième couche constituée par un mélange d'une matière synthétique thermodurcissable et d'une matière synthétique thermoplastique et qui enrobe complètement la premiere couche et de ce fait également les fils ou les fibres, et

(b) par une couche inférieure reliée solidement à la couche supérieure et constituée par une matière synthétique flexible, thermoplastique ou thermodurcissable ou éventuellement expansée, la surface de cette couche étant lisse et fermée contrairement à celle de la couche supérieure.

2. Bande textile suivant la revendication 1, caractérisée en ce qu'aussi bien la matière synthétique thermodurcissable que la matière synthétique thermoplastique avec lesquelles la matière textile est imprégnée sont constituées par des copolymères auto-réticulants d'esters d'alcoyle inférieurs de l'acide acrylique et de l'acide méthacrylique et contenant le cas échéant de l'acide acrylique et/ou de l'acide methacrylique, les groupes d'alcoyle des esters présentant une chaîne droite ou ramifiée et 1 à 5 atomes de carbone.

3. Bande textile suivant la revendication 2, caractérisée en ce que la proportion thermodurcissable des couches en matière synthétique est constituée par des copolymères d'acrylate d'éthyle et de méthacrylate de méthyle contenant éventuellement de l'acide acrylique et/ou de l'acide méthacrylique et la proportion thermoplastique de la deuxième couche d'imprégnation de la matière textile est formée par des copolymères contenant du méthacrylate de méthyle et de l'acrylate de butyle et qui contiennent éventuellement et additionnellement de l'acide acrylique et/ou de l'acide méthacrylique, ou est formée par de PVC ou de polyvinylacétate.

4. Bande textile suivant l'une des revendications 1 à 3, caractérisée en ce que la première et la deuxième couches en matière synthétique avec lesquelles la matière textile est imprégnée ainsi que, le cas échéant, la couche inférieure contiennent un agent ignifugeant et/ou un biocide.

5. Bande textile suivant la revendication 4, caractérisée en ce que l'agent ignifugeant est un acide métaphosphonique ou son sel d'ammonium.

6. Bande textile suivant la revendication 4 ou 5, caractérisée en ce que le rapport du poids entre la matière synthétique thermodurcissable et l'agent ignifugeant est compris entre 1:1 et 1,5:1 dans la première couche purement thermodurcissable et en ce que le rapport du poids entre le mélange de matières synthétiques et l'agent ignifugeant est compris entre 4:1 et 5:1 dans la deuxième couche, à chaque fois dans le poids à sec.

7. Bande textile suivant l'une des revendications 1 à 6, caractérisée en ce que le rapport du poids entre la matière synthétique thermodurcissable et la matière thermoplastique est compris entre 5:1 et 8:1 dans la couche supérieure décorative.

8. Bande textile suivant l'une des revendications 1 à 7, caractérisée en ce que la couche inférieure reliée solidement avec la couche supérieure décorative, est en PVC mou contenant une proportion d'un émollient pouvant atteindre 50 parties en poids par 100 parties en poids du PVC qui peut contenir les additifs et les substances de remplissage habituelles.

9. Bande textile suivant l'une des revendications 1 à 7, caractérisée en ce que la couche inférieure est formée par de la mousse battue d'acrylate réticulée.

10. Bande textile suivant l'une des revendications 1 à 9, caractérisée en ce que la couche supérieure est combinée avec la couche inférieure par collage au moyen d'un adhésif approprié et par doublage ou par moulage par compression à chaud.

11. Procédé pour la réalisation de la bande textile suivant les revendications 1 à 10, caractérisé en ce que

(a) lors d'une première opération le tissu textile est rendu stable et résistant au coulissement par imprégnation en le faisant passer dans un premier bain d'immersion qui contient une dispersion d'une matière thermodurcissable dans un agent de dispersion approprié, des émulsionnants et, le cas échéant, un agent ignifugeant et/ou des biocides,

(b) la bande textile ayant subi ce traitement préalable, est imprégnée d'une deuxième couche en la faisant passer dans un deuxième bain d'immersion qui contient une dispersion d'un mélange de matières synthétiques thermodurcissables et thermoplastiques dans un agent de dispersion approprié, des émulsionnants ainsi qu'éventuellement un agent ignifugeant et/ou de biocides,

(c) la matière de revêtement en excès est ensuite éliminée par raclage et la bande textile passe dans un canal de séchage à l'intérieur duquel se produit en même temps la réticulation et/ou la condensation des matières synthétiques thermodurcissables et thermoplastiques,

(d) la couche inférieure en matière synthétique thermoplastique est appliquée finalement par laminage sur la bande textile, ayant subi une double imprégnation, à l'aide d'une calandre dont les cylindres sont chauffés à une température comprise entre 150 et 190°C.

12. Procédé suivant la revendication 11, caractérisé en ce que dans le premier bain la matière textile est recouverte d'une quantité de produit comprise, de préférence, entre 20 et 80 g/m², dans le deuxième bain d'une quantité comprise entre 100 et 130 g/m² et la couche inférieure est appliquée par laminage en une quantité comprise entre 150 et 170 g/m².

13. L'utilisation de la bande textile suivant l'une des revendications 1 à 10 au revêtement en continu d'éléments de recouvrement de murs et de plafonds de grande surface et se présentant sous forme de tôles, de bandes métalliques, de plaques en bois, en matière synthétique ou en carton-plâtre destinées à l'équipement intérieur de bâtiments, de cabines de navires, de wagons de chemin de fer, de véhicules automobiles et d'avions de ligne.